# EUROPEAN PATENT APPLICATION

(11) **EP 4 492 909 A1**
(43) Date of publication of application: **15.01.2025**
(21) Application number: 23777841.0
(22) Date of filing: 15.03.2023
(51) Int. Cl.: H04W 76/15, H04W 36/00

(54) **COMMUNICATION METHOD AND APPARATUS**

(30) Priority: 30.03.2022 CN 202210334251
(71) Applicant: Huawei Technologies Co., Ltd., Shenzhen, Guangdong 518129 (CN)
(72) Inventor: YOU, Chunhua, Shenzhen, Guangdong 518129 (CN); WANG, Jue, Shenzhen, Guangdong 518129 (CN); FAN, Qiang, Shenzhen, Guangdong 518129 (CN); LOU, Chong, Shenzhen, Guangdong 518129 (CN)
(74) Representative: Thun, Clemens
(86) International application number: PCT/CN2023/081551
(87) International publication number: WO 2023/185466

(57) **Abstract**

This application relates to the field of communication technologies, and discloses a communication method and apparatus. The method includes: A first network device receives energy saving information of M cells from a second network device, and sends second request information to the second network device based on the energy saving information of the M cells, where the second request information is for requesting to add N cells in the M cells to a secondary cell group of a terminal device. According to the method, the first network device may determine, based on the energy saving information of the M cells of the second network device, whether to request to add the second network device as a secondary network device of the terminal device. In this way, because energy saving information of a cell managed by a candidate secondary network device is considered when the first network device adds the secondary network device for the terminal device, this facilitates adding an appropriate network device as the secondary network device of the terminal device.

## Description

### CROSS REFERENCE TO RELATED APPLICATION

This application claims priority to Chinese Patent Application No. 202210334251.8, filed with the China National Intellectual Property Administration on March 30, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

To achieve a higher transmission rate and lower transmission latency, a dual connectivity (dual connectivity, DC) technology is introduced to the 3rd generation partnership project (3rd generation partnership project, 3GPP). The DC technology means that a single terminal device may establish connections to two network devices separately. One of the two network devices is used as a master network device of the terminal device, and the other network device is used as a secondary network device of the terminal device.

As a network scale increasingly expands, energy consumption of devices keeps increasing. High energy consumption of the network devices gradually becomes one of main causes for high operation costs of operators. To reduce energy consumption of the network device, an energy saving technology of the network device is currently introduced. For example, the network device may implement energy saving by performing an operation such as cell shutdown.

However, after the energy saving technology of the network device is introduced, how to implement dual connectivity still needs further research.

### SUMMARY

This application provides a communication method and apparatus, to consider energy saving information of a candidate secondary network device when a secondary network device is added for a terminal device, thereby facilitating adding an appropriate network device as the secondary network device of the terminal device.

According to a first aspect, an embodiment of this application provides a communication method. The method may be applied to a first network device or a module in the first network device. An example in which the method is applied to the first network device is used. In the method, the first network device receives energy saving information of M cells from a second network device. The M cells are cells managed by the second network device. The first network device sends second request information to the second network device based on the energy saving information of the M cells. The second request information is for requesting to add N cells in the M cells to a secondary cell group of a terminal device. M and N are positive integers, and N is less than or equal to M.

According to the foregoing method, the first network device may determine, based on the energy saving information of the M cells of the second network device, whether to request to add the second network device as a secondary network device of the terminal device. For example, if all the M cells are in a deep energy saving state, it is very likely that the second network device cannot meet a data transmission requirement of the terminal device in this case. Further, the first network device may not request to add the second network device as the secondary network device of the terminal device. In this way, because energy saving information of a cell managed by a candidate secondary network device is considered when the first network device adds the secondary network device for the terminal device, this facilitates adding an appropriate network device as the secondary network device of the terminal device.

In a possible design, the method further includes: sending first request information to the second network device. The first request information includes identifiers of the M cells. The first request information is for requesting the energy saving information of the M cells. The M cells are selected by the first network device from W cells based on measurement results that are of the W cells and that are reported by the terminal device. W is a positive integer, and W is greater than or equal to M.

In a possible design, the M cells include a first cell. Energy saving information of the first cell includes at least one of the following:
energy saving state information, where the energy saving state information indicates whether the first cell is in an energy saving state;
energy saving direction information, where the energy saving direction information indicates an energy saving direction of the first cell, and the energy saving direction includes an uplink direction and/or a downlink direction;
energy saving mode information, where the energy saving mode information indicates an energy saving mode used by the first cell, and the energy saving mode is a semi-static energy saving mode, a dynamic energy saving mode, or a hybrid energy saving mode;
energy saving degree information, where the energy saving degree information indicates an energy saving degree of the first cell;
energy saving object information, where the energy saving object information indicates an energy saving object of the first cell, and the energy saving object includes at least one of the following: a synchronization signal/physical broadcast channel block SSB, a random access signal, a configured grant, system information, a sounding reference signal SRS, and a physical uplink control channel PUCCH;
energy saving carrier information, where the energy saving carrier information indicates an unavailable carrier of the first cell;
energy saving resource information, where the energy saving resource information indicates an unavailable space domain resource of the first cell; and
a maximum data transmission rate that can be provided by the first cell for the terminal device.

In a possible design, when the energy saving mode is the semi-static energy saving mode, the energy saving mode information includes at least one of the following:
a periodicity of the semi-static energy saving mode;
a proportion of an available time domain resource in the periodicity;
a proportion of an unavailable time domain resource in the periodicity;
a proportion of an available physical resource block PRB in the periodicity;
a proportion of an unavailable PRB in the periodicity; and
a proportion of a PRB that is actually used in a preset time period.

In a possible design, the unavailable space domain resource of the first cell includes at least one of the following:
a quantity of unavailable ports;
a quantity of unavailable beams;
a quantity of unavailable channels;
a quantity of unavailable antennas;
a quantity of unavailable transmission reception points TRPs; and
a quantity of unavailable power amplifiers.

In a possible design, the method further includes: receiving first indication information from the second network device. The first indication information indicates that the second network device has updated energy saving information of at least one of the N cells.

In a possible design, the first indication information is carried in a secondary base station release request message.

In a possible design, the first indication information includes updated energy saving information of the at least one cell. The method further includes: releasing the second network device based on the updated energy saving information of the at least one cell.

According to the foregoing method, after the second network device updates the energy saving information of the at least one cell, the second network device may notify the first network device. Therefore, when a cell managed by the second network device cannot meet the data transmission requirement of the terminal device because of update of energy saving information, the first network device may adjust a data transmission manner in a timely manner, for example, release the second network device and attempts to add another secondary network device, to avoid affecting data transmission of the terminal device.

In a possible design, the method further includes: receiving third request information from the second network device, where the third request information is for requesting to update energy saving information of at least one of the N cells; and sending second indication information to the second network device based on the third request information, where the second indication information indicates that the second network device is allowed to update the energy saving information of the at least one cell.

According to the foregoing method, the second network device may first request, from the first network device, whether the first network device allows the update of the energy saving information of the at least one cell. If the first network device allows the update of the energy saving information of the at least one cell, the second network device may update the energy saving information of the at least one cell. This can effectively avoid a case in which the second network device updates the energy saving information of the at least one cell without permission, thereby avoid affecting the data transmission of the terminal device.

In a possible design, the method further includes: sending fourth request information to the second network device. The fourth request information is for requesting the second network device to update energy saving information of at least one of the N cells.

In a possible design, before the sending fourth request information to the second network device, the method further includes at least one of the following: determining that a data transmission requirement of the terminal device changes; determining that key data of the terminal device is to arrive or has arrived; and determining that an amount of data that is of the terminal device and that is cached in the first network device is greater than or equal to a threshold.

According to the foregoing method, the second network device may first request, from the first network device, whether the first network device allows the update of the energy saving information of the at least one cell. If the first network device allows the update of the energy saving information of the at least one cell, the second network device may update the energy saving information of the at least one cell. In other words, the first network device may control the second network device to update the energy saving information of the at least one cell. This can effectively ensure that energy saving of the second network device is implemented without affecting data transmission of the terminal device.

According to a second aspect, an embodiment of this application provides a communication method. The method may be applied to a second network device or a module in the second network device. An example in which the method is applied to the second network device is used. In the method, the second network device sends energy saving information of M cells to a first network device. The M cells are cells managed by the second network device. The second network device receives second request information that is sent by the first network device based on the energy saving information of the M cells. The second request information is for requesting to add N cells in the M cells to a secondary cell group of a terminal device. M and N are positive integers, and N is less than or equal to M.

In a possible design, the method further includes: receiving first request information from the first network device. The first request information includes identifiers of the M cells. The first request information is for requesting the energy saving information of the M cells. The M cells are selected by the first network device from W cells based on measurement results that are of the W cells and that are reported by the terminal device. W is a positive integer, and W is greater than or equal to M.

In a possible design, the M cells include a first cell. Energy saving information of the first cell includes at least one of the following:
energy saving state information, where the energy saving state information indicates whether the first cell is in an energy saving state;
energy saving direction information, where the energy saving direction information indicates an energy saving direction of the first cell, and the energy saving direction includes an uplink direction and/or a downlink direction;
energy saving mode information, where the energy saving mode information indicates an energy saving mode used by the first cell, and the energy saving mode is a semi-static energy saving mode, a dynamic energy saving mode, or a hybrid energy saving mode;
energy saving degree information, where the energy saving degree information indicates an energy saving degree of the first cell;
energy saving object information, where the energy saving object information indicates an energy saving object of the first cell, and the energy saving object includes at least one of the following: an SSB, a random access signal, a configured grant, system information, an SRS, and a PUCCH;
energy saving carrier information, where the energy saving carrier information indicates an unavailable carrier of the first cell;
energy saving resource information, where the energy saving resource information indicates an unavailable space domain resource of the first cell; and
a maximum data transmission rate that can be provided by the first cell for the terminal device.

In a possible design, when the energy saving mode is the semi-static energy saving mode, the energy saving mode information includes at least one of the following:
a periodicity of the semi-static energy saving mode;
a proportion of an available time domain resource in the periodicity;
a proportion of an unavailable time domain resource in the periodicity;
a proportion of an available PRB in the periodicity;
a proportion of an unavailable PRB in the periodicity; and
a proportion of a PRB that is actually used in a preset time period.

In a possible design, the unavailable space domain resource of the first cell includes at least one of the following:
a quantity of unavailable ports;
a quantity of unavailable beams;
a quantity of unavailable channels;
a quantity of unavailable antennas;
a quantity of unavailable transmission reception points TRPs; and
a quantity of unavailable power amplifiers.

In a possible design, the method further includes: sending first indication information to the first network device. The first indication information indicates that the second network device has updated energy saving information of at least one of the N cells.

In a possible design, the first indication information includes updated energy saving information of the at least one cell.

In a possible design, the method further includes: sending third request information to the first network device, where the third request information is for requesting to update energy saving information of at least one of the N cells; and receiving second indication information from the first network device, where the second indication information indicates that the second network device is allowed to update the energy saving information of the at least one cell.

In a possible design, the method further includes: receiving fourth request information from the first network device, where the fourth request information is for requesting the second network device to update energy saving information of at least one of the N cells

In a possible design, the fourth request information includes a cause value, and the cause value indicates at least one of the following: a data transmission requirement of the terminal device changes; key data of the terminal device is to arrive or has arrived; and an amount of data that is of the terminal device and that is cached in the first network device is greater than or equal to a threshold.

The method claimed in the second aspect corresponds to that in the first aspect. For beneficial effects of related technical features, refer to the descriptions in the first aspect. Details are not described herein again.

According to a third aspect, an embodiment of this application provides a communication apparatus. The communication apparatus may be a first network device or a second network device. The communication apparatus has a function for implementing the first aspect or the second aspect. For example, the communication apparatus includes a corresponding module, unit, or means for performing the operation in the first aspect or the second aspect. The function, unit, or means may be implemented by software or hardware, or may be implemented by hardware executing corresponding software.

In a possible design, the communication apparatus includes a processing unit and a communication unit. The communication unit may be configured to receive and send a signal, to implement communication between the communication apparatus and another apparatus. For example, the communication unit is configured to send system information to a terminal device. The processing unit may be configured to perform some internal operations of the communication apparatus. Functions performed by the processing unit and the communication unit may correspond to the operations in the first aspect or the second aspect.

In a possible design, the communication apparatus includes a processor, and the processor may be configured to be coupled to a memory. The memory may store a necessary computer program or instructions for implementing the functions in the first aspect or the second aspect. The processor may perform the computer program or instructions stored in the memory. When the computer program or instructions are performed, the communication apparatus is enabled to perform the method according to any possible design or implementation in the foregoing first aspect or second aspect.

In a possible design, the communication apparatus includes a processor and a memory. The memory may store a necessary computer program or instructions for implementing the functions in the first aspect or the second aspect. The processor may perform the computer program or instructions stored in the memory. When the computer program or instructions are performed, the communication apparatus is enabled to perform the method according to any possible design or implementation in the foregoing first aspect or second aspect.

In a possible design, the communication apparatus includes a processor and an interface circuit. The processor is configured to communicate with another apparatus via the interface circuit and perform the method according to any possible design or implementation in the foregoing first aspect or second aspect.

It may be understood that in the third aspect, the processor may be implemented by hardware or software. When the processor is implemented by the hardware, the processor may be a logic circuit, an integrated circuit, or the like. When the processor is implemented by the software, the processor may be a general-purpose processor, and is implemented by reading software code stored in the memory. In addition, there may be one or more processors, and there may be one or more memories. The memory may be integrated with the processor, or the memory and the processor are disposed separately. In a specific implementation process, the memory and the processor may be integrated on a same chip, or may be separately disposed on different chips. A type of the memory and a manner of disposing the memory and the processor are not limited in embodiments of this application.

According to a fourth aspect, this application provides a communication system. The communication system may include a first network device and a second network device. The first network device is configured to perform the method according to any possible design of the first aspect, and the second network device is configured to perform the method according to any possible design of the second aspect.

According to a fifth aspect, this application provides a computer-readable storage medium. The computer-readable storage medium stores computer-readable instructions. When a computer reads and executes the computer-readable instructions, the computer is enabled to perform the method according to any possible design in the first aspect or the second aspect.

According to a sixth aspect, this application provides a computer program product. When a computer reads and executes the computer program product, the computer is enabled to perform the method according to any possible design in the first aspect or the second aspect.

According to a seventh aspect, this application provides a chip. The chip includes a processor. The processor is coupled to a memory, and is configured to read and execute a software program stored in the memory, to implement the method according to any possible design in the first aspect or the second aspect.

The aspects or other aspects of this application are more concise and understandable in descriptions of the following embodiments.

### BRIEF DESCRIPTION OF DRAWINGS

FIG. 1 is a diagram of a network architecture applicable to an embodiment of this application;
FIG. 2A is a diagram of a CU-DU separation architecture according to an embodiment of this application;
FIG. 2B is a diagram of another CU-DU separation architecture according to an embodiment of this application;
FIG. 3 is a diagram of a data radio bearer corresponding to dual connectivity according to an embodiment of this application;
FIG. 4 is a schematic flowchart of adding a secondary network device according to an embodiment of this application;
FIG. 5 is a schematic flowchart corresponding to a communication method according to an embodiment of this application;
FIG. 6 is a diagram of a semi-static energy saving mode according to an embodiment of this application;
FIG. 7 is a schematic flowchart corresponding to a communication method according to an embodiment of this application;
FIG. 8 is a possible example block diagram of an apparatus according to an embodiment of this application; and
FIG. 9 is a diagram of a structure of a network device according to an embodiment of this application.

### DESCRIPTION OF EMBODIMENTS

The following describes technical solutions in embodiments of this application with reference to accompanying drawings in embodiments of this application.

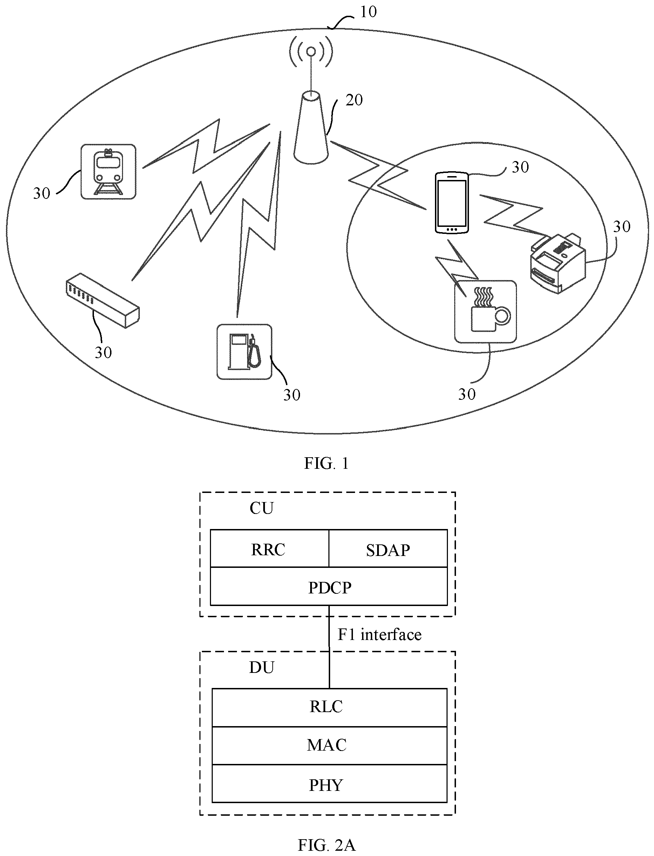

FIG. 1 is a diagram of a communication system applicable to an embodiment of this application. As shown in FIG. 1, a communication system 10 includes one or more network devices 20 and one or more terminal devices 30. An interface between the network device and the terminal device may be a Uu interface (or referred to as an air interface). Data transmission between the network device 20 and the terminal device 30 may be performed via an air interface resource.

### (1) Terminal device

The terminal device is also referred to as user equipment (user equipment, UE), a mobile station (mobile station, MS), a mobile terminal (mobile terminal, MT), or the like, and is a device that provides voice and/or data connectivity for a user, for example, a handheld device or a vehicle-mounted device that has a wireless connection function. Currently, some examples of the terminal device are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), and the like.

### (2) Network device

The network device is a radio access network (radio access network, RAN) node (or device) that enables a terminal to access a wireless network, and may also be referred to as a base station. Currently, some examples of the RAN node are: a NodeB (NodeB, NB), a next generation NodeB (gNB), a transmission reception point (transmission reception point, TRP), an evolved NodeB (evolved NodeB, eNB), a radio network controller (radio network controller, RNC), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), and the like.

### (3) Communication between a terminal device and a network device

The communication between the terminal device and the access network device complies with a specific protocol layer structure. For example, a control plane protocol layer structure may include a radio resource control (radio resource control, RRC) layer, a packet data convergence protocol (packet data convergence protocol, PDCP) layer, a radio link control (radio link control, RLC) layer, a media access control (media access control, MAC) layer, and a physical (physical, PHY) layer. A user plane protocol layer structure may include a PDCP layer, an RLC layer, a MAC layer, and a physical layer. In a possible implementation, a service data adaptation protocol (service data adaptation protocol, SDAP) layer above the PDCP layer may be further included. The SDAP layer, the PDCP layer, the RLC layer, the MAC layer, and the physical layer may also be collectively referred to as an access layer. For specific descriptions of the foregoing protocol layers, refer to related technical specifications of the 3GPP.

### (4) CU-DU separation architecture

For example, in some possible network structures, a network device may include one or more central units (central units, CUs) and one or more distributed units (distributed units, DUs). A plurality of DUs may be centrally controlled by one CU. The architecture may be referred to as a CU-DU separation architecture. For example, an interface between the CU and the DU may be referred to as an F1 interface. A control plane (control plane, CP) interface may be an F1-C interface, and a user plane (user plane, UP) interface may be an F1-U interface.

Processing functions of the CU and the DU may be divided based on protocol layers of a wireless network. For example, as shown in FIG. 2A, functions of the PDCP layer and protocol layers above the PDCP layer are set on the CU, and functions of protocol layers (for example, the RLC layer and the MAC layer) below the PDCP layer are set on the DU. It may be understood that division of the processing functions of the CU and the DU based on the protocol layers is merely an example, and division may alternatively be performed in another manner. For example, functions of protocol layers above the RLC layer are set on the CU, and functions of the RLC layer and protocol layers below the RLC layer are set on the DU. For another example, division may be performed in a manner in which the CU or the DU has functions of more protocol layers. For another example, division may be performed in a manner in which the CU or the DU has a part of processing functions of the protocol layers. This is not limited in embodiments of this application.

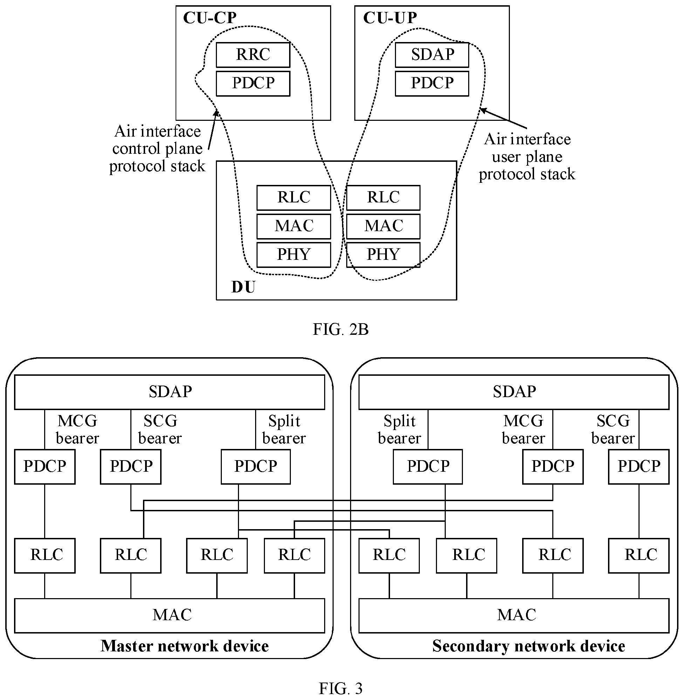

Further, a function of the CU may be implemented by a same entity, or may be implemented by different entities. For example, functions of the CU may be further divided, in other words, the control plane and the user plane are separated and implemented by different entities: a control plane CU entity (namely, a CU-CP entity) and a user plane CU entity (namely, a CU-UP entity). The CU-CP entity and the CU-UP entity may be coupled to the DU, to jointly complete functions of a RAN device. An interface between the CU-CP entity and the CU-UP entity may be an E1 interface. An interface between the CU-CP entity and the DU may be an F1-C interface. An interface between the CU-UP entity and the DU may be an F1-U interface. One DU and one CU-UP may be connected to one CU-CP. Under control of a same CU-CP, one DU may be connected to a plurality of CU-UPs, and one CU-UP may be connected to a plurality of DUs. Under coordination of a plurality of CU-CPs, one CU-UP may alternatively be connected to the plurality of coordinated CU-CPs. Therefore, flexibility of the CU-CP is improved. FIG. 2B is a diagram of air interface protocol stack distribution. As shown in FIG. 2B, for both a user plane and a control plane, an air interface protocol stack may be that RLC, MAC, and PHY are on a DU, and PDCP and upper protocol layers are on a CU.

It should be noted that in the architectures shown in FIG. 2A and FIG. 2B, signaling generated by the CU may be sent to a terminal device through the DU, or signaling generated by a terminal device may be sent to the CU through the DU. The DU may not parse the signaling, and directly encapsulate the signaling through a protocol layer and then transparently transmit encapsulated signaling to the terminal device or the CU. If transmission of such signaling between the DU and the terminal device is involved in the following embodiments, sending or receiving of the signaling by the DU includes the scenario in this case. For example, signaling of an RRC layer or the PDCP layer is finally processed to be physical layer data and is sent to the terminal device, or is converted from received physical layer data. In the architecture, the signaling of the RRC layer or the PDCP layer may alternatively be considered to be sent by the DU, or sent by the DU and a radio frequency apparatus.

It may be understood that a quantity of network devices and a quantity of terminal devices included in a communication system are not limited in embodiments of this application. In addition to the network device and the terminal device, the foregoing communication system may further include another device or network element such as a core network device or a relay device. This is not limited in embodiments of this application.

The communication system shown in FIG. 1 may support various radio access technologies (radio access technologies, RATs). For example, the communication system shown in FIG. 1 may be a 4^{th} generation (4^{th} generation, 4G) communication system (which may also be referred to as a long term evolution (long term evolution, LTE) communication system), a 5G communication system (which may also be referred to as a new radio (new radio, NR) communication system), a wireless fidelity (wireless fidelity, Wi-Fi) system, or a future-oriented evolved system. The communication system and service scenarios described in embodiments of this application are intended to describe the technical solutions in embodiments of this application more clearly, and does not constitute a limitation on the technical solutions provided in embodiments of this application. A person of ordinary skill in the art may learn that, with evolution of the communication system and emergence of a new service scenario, the technical solutions provided in embodiments of this application are also applicable to a similar technical problem.

The following first explains and describes related technical features in embodiments of this application. It should be noted that these explanations are intended to make embodiments of this application easier to understand, and should not be considered as a limitation on the protection scope claimed in this application.

### 1. Dual connectivity

In a network architecture shown in FIG. 1, the terminal device may establish connections to two network devices (that is, establish the dual connectivity). One of the two network devices is used as a master network device of the terminal device, and the other network device is used as a secondary network device of the terminal device.

Because the terminal device may receive all services of a plurality of cells corresponding to a same network device, a serving cell group provided by the master network device for the terminal device may be referred to as a master cell group (master cell group, MCG). Similarly, a serving cell group provided by the secondary network device for the terminal device is referred to as a secondary cell group (secondary cell group, SCG).

The MCG may include at least one cell. When the MCG includes only one cell, the cell is a primary cell (primary cell, PCell) of the terminal device. The terminal device may perform an initial connection establishment process or start a connection re-establishment process in the PCell. The SCG may include at least one cell. When the SCG includes only one cell, the cell is a primary secondary cell (primary secondary cell, PSCell) of the terminal device. The terminal device may perform random access in the PSCell, or when random access does not need to be performed in the PSCell, the terminal device may directly perform transmission of a physical uplink shared channel (physical uplink shared channel, PUSCH) in the PSCell.

In a 5G communication system, the PCell and the PSCell may be collectively referred to as a special cell (special sell, SpCell). When the MCG or the SCG includes a plurality of cells, the plurality of cells include one SpCell, and cells other than the SpCell are all referred to as secondary cells (secondary cells, SCells). Carrier aggregation is performed between the SCell and the SpCell in each cell group, to jointly provide a service for the terminal device.

### 2. Data transmission corresponding to dual connectivity

As shown in FIG. 3, a data radio bearer (data radio bearer, DRB) corresponding to the dual connectivity may include an MCG bearer (MCG bearer), an SCG bearer (SCG bearer), and a split bearer (split bearer). The MCG bearer means that a RLC/MAC entity of the DRB is located only on a master network device. The SCG bearer means that a RLC/MAC entity of the DRB is located only on a secondary network device. The split bearer means that a RLC/MAC entity of the DRB is located on both a master network device and a secondary network device.

After a terminal device establishes the dual connectivity, in an example of downlink data transmission, some PDU sessions of the terminal device and/or some quality of service (quality of service, QoS) flows in the PDU sessions may be split from the master network device to the secondary network device. For example, a QoS flow split to the secondary network device may be mapped to the SCG bearer or the split bearer; and some QoS flows that are not split may be mapped to the MCG bearer or the split bearer. All data in the QoS flow that is mapped to the SCG bearer may be sent by the secondary network device to the terminal device in a cell in the secondary cell group. A part of data in the QoS flow that is mapped to the split bearer may be sent by the secondary network device to the terminal device in a cell in the secondary cell group, and the other part may be sent by the master network device to the terminal device in a cell in the master cell group. Data in the QoS flow that is mapped to the MCG bearer may be sent by the master network device to the terminal device in a cell in the master cell group.

### 3. Energy saving technology of a network device

To reduce energy consumption of the network device, the energy saving technology of the network device is currently introduced. For example, the network device may determine, based on load information, whether to perform an energy saving operation, for example, shut down a cell. The load information may include radio resource usage, a quantity of users, a quantity of RRC connections, and the like. For example, the network device may shut down, at night based on the load information, a cell covering an area in which an office building is located.

Further, in addition to the energy saving operation of shutting down a cell, in embodiments of this application, the network device may further perform an energy saving operation at a finer granularity. For example, the network device may perform a shutdown operation in time domain, frequency domain, and space domain, thereby more effectively reducing the power consumption of the network device.

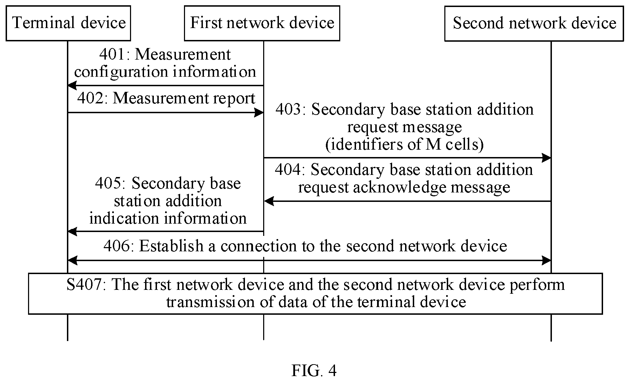

As described above, a terminal device may establish connections to two network devices. Specifically, there may be a plurality of specific implementations in which the terminal device establishes the connections to the two network devices. For example, the terminal device may first establish a connection to a master network device, and then the master network device may add a secondary network device for the terminal device in a secondary base station addition procedure. The following describes a possible procedure with reference to FIG. 4.

FIG. 4 is a schematic flowchart of adding a secondary network device according to an embodiment of this application. As shown in FIG. 4, the procedure may include the following steps.

S401: A first network device sends measurement configuration information to a terminal device. For example, the measurement configuration information may include frequency information that needs to be measured by the terminal device. Correspondingly, the terminal device may receive the measurement configuration information and perform measurement.

For example, the first network device may send the measurement configuration information to the terminal device via an RRC reconfiguration message.

S402: The terminal device reports a measurement report to the first network device, where the measurement report may include identifiers of W cells and measurement results of the W cells. Correspondingly, the first network device may receive the measurement report. W is a positive integer.

Herein, the W cells may be cells managed by a same network device or cells managed by different network devices. For example, the W cells may include at least one cell managed by a second network device.

For example, the measurement result of the cell may include reference signal received power (reference signal received power, RSRP) or reference signal received quality (reference signal received quality, RSRQ) of the cell. This is not specifically limited.

S403: The first network device sends a secondary base station addition request (SeNB addition request) message to the second network device based on the measurement results of the W cells, where the secondary base station addition request message is for requesting to add the second network device as a secondary network device of the terminal device.

Herein, the first network device may determine, based on the measurement results of the W cells, whether to request to add the second network device as the secondary network device. If the first network device determines to request to add the second network device as the secondary network device, the first network device may send the secondary base station addition request message to the second network device. If the first network device determines not to request to add the second network device as the secondary network device, the first network device may not send the secondary base station addition request message. In this case, the first network device may subsequently attempt to add another network device as a secondary network device of the terminal device.

There may be a plurality of cases in which the first network device determines whether to request to add the second network device as the secondary network device. For example, after determining that a preset condition is met, the first network device may determine to request to add the second network device as the secondary network device. The preset condition may include a condition 1. That the first network device determines that the condition 1 is met may mean: The first network device determines that measurement results of M cells that are managed by the second network device and that are in the W cells are all greater than or equal to a threshold 1. M is a positive integer, and M is less than or equal to W.

Optionally, the preset condition may further include another possible condition, for example, a condition 2. That the first network device determines that the condition 2 is met may mean: The first network device determines that a secondary network device is needed to split data of the terminal device. There may be a plurality of cases in which the first network device determines that the secondary network device is needed to split the data of the terminal device. Three possible cases are described herein.

**Case 1:** If the first network device determines that service data that is to arrive or has arrived at the terminal device has a relatively high requirement on a transmission rate (for example, the transmission rate needs to be greater than or equal to a threshold 2), the first network device may determine that the secondary network device is needed to split the data of the terminal device.

**Case 2:** If the first network device determines that service data that is to arrive or has arrived at the terminal device has a relatively high requirement on reliability (for example, the reliability needs to be greater than or equal to a threshold 3), the first network device may determine that the secondary network device is needed to split the data of the terminal device.

In embodiments of this application, the foregoing data that has the relatively high requirement on the transmission rate or the relatively high requirement on the reliability may be collectively referred to as key data. The relatively high requirement on the transmission rate may also be understood as a relatively high requirement on transmission latency.

**Case 3:** If the first network device determines that an amount of data that is of the terminal device and that is cached in the first network device is greater than or equal to a threshold 4, the first network device may determine that the secondary network device is needed to split the data of the terminal device.

For example, the secondary base station addition request message may include identifiers of the M cells. Optionally, the secondary base station addition request message may further include other possible information, for example, the measurement results of the M cells. This is not specifically limited. That the secondary base station addition request message is for requesting to add the second network device as a secondary network device of the terminal device may be replaced with: The secondary base station addition request message is for requesting to add the M cells to a secondary cell group of the terminal device.

S404: After the second network device receives the secondary base station addition request message from the first network device, if the second network device determines that the terminal device can be admitted, the second network device may allocate radio resources to the terminal device, and send a secondary base station addition request acknowledge (SeNB addition request acknowledge) message to the first network device.

Herein, the acknowledge message may include information about the radio resources that are for the M cells and that are allocated by the second network device to the terminal device.

S405: The first network device sends secondary base station addition indication information to the terminal device, where the secondary base station addition indication information indicates that the second network device is added as the secondary network device of the terminal device.

For example, the secondary base station addition indication information may be carried in an RRC reconfiguration message. The secondary base station addition indication information may include the information about the radio resources that are for the M cells and that are allocated by the second network device to the terminal device. This is not specifically limited.

S406: The terminal device initiates random access to the second network device in one cell (where the cell is a PSCell) of the M cells, to establish a connection to the second network device.

S407: The first network device and the second network device perform transmission of the data of the terminal device.

According to the procedure shown in FIG. 4, the first network device may add the second network device as the secondary network device for the terminal device. However, after an energy saving technology of a network device is introduced, the M cells of the second network device may be in an energy saving state. In this case, if the first network device adds the second network device as the secondary network device of the terminal device in the procedure shown in FIG. 4, it may be difficult to meet a data transmission requirement of the terminal device (for example, when the key data of the terminal device arrives and the M cells are in the energy saving state, it is difficult to meet a transmission requirement of the key data).

On this basis, an embodiment of this application provides a communication method, to consider energy saving information of a candidate secondary network device when a secondary network device is added for the terminal device, thereby facilitating adding an appropriate network device as the secondary network device of the terminal device.

The following describes the communication method provided in embodiments of this application in detail with reference to Embodiment 1 and Embodiment 2.

### Embodiment 1

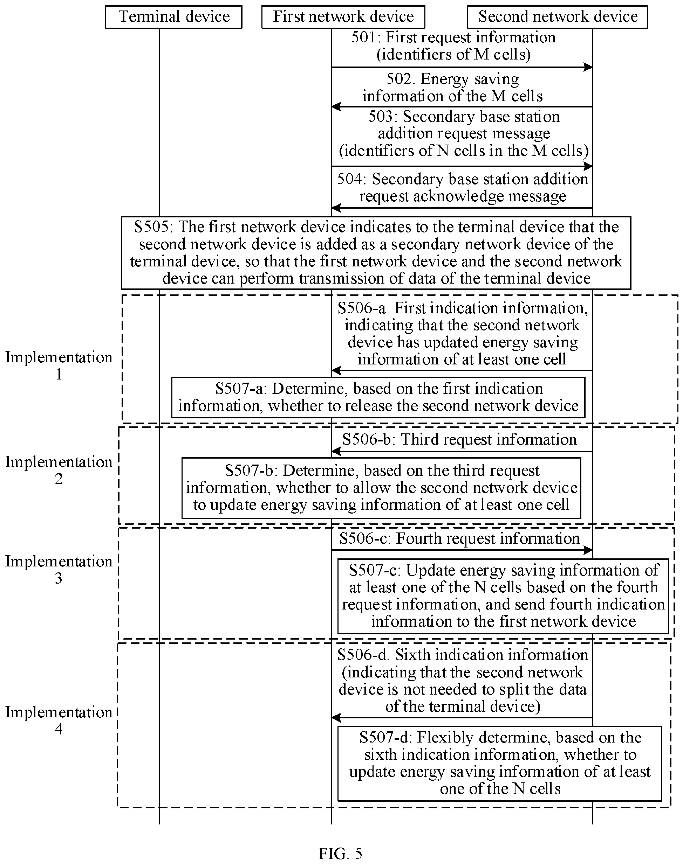

FIG. 5 is a schematic flowchart corresponding to a communication method according to Embodiment 1 of this application. As shown in FIG. 5, the method includes the following steps.

S501: A first network device sends first request information to a second network device, where the first request information includes identifiers of M cells. Correspondingly, the second network device may receive the first request information, where the first request information is for requesting energy saving information of the M cells. The M cells are cells managed by the second network device, or this may be understood as that the second network device provides a service for the M cells.

For example, after the first network device determines that a preset condition is met, the first network device may send the first request information to the second network device. For a specific implementation in which the first network device determines that the preset condition is met, refer to the descriptions in FIG. 4.

In a possible implementation, the first network device and the second network device may be network devices in a same radio access technology. For example, both the first network device and the second network device are network devices in a 5G communication system or are network devices in a 4G communication system. Alternatively, the first network device and the second network device may be network devices in different radio access technologies. For example, one is a network device in a 4G communication system, and the other is a network device in a 5G communication system.

S502: The second network device sends the energy saving information of the M cells to the first network device. Correspondingly, the first network device may receive the energy saving information of the M cells.

For example, the M cells include a first cell. The first cell is used as an example. Energy saving information of the first cell may include energy saving state information and/or assistance information. The energy saving state information indicates whether the first cell is in an energy saving state. The assistance information includes related information about the first cell in the energy saving state. When the energy saving state information indicates that the first cell is in the energy saving state, the energy saving information of the first cell may further include the assistance information. When the energy saving state information indicates that the first cell is in a non-energy-saving state, the energy saving information of the first cell does not include the assistance information. In addition, the energy saving information of the first cell may alternatively include the assistance information but not the energy saving state information. In this case, the assistance information may implicitly indicate that the first cell is in the energy saving state. The assistance information may include at least one of the following (1) to (7).

### (1) Energy saving direction information

The energy saving direction information indicates an energy saving direction of the first cell. The energy saving direction includes an uplink direction and/or a downlink direction. When the energy saving direction is the uplink direction, it means that the second network device performs an energy saving operation in the uplink direction of the first cell. When the energy saving direction is the downlink direction, it means that the second network device performs an energy saving operation in the downlink direction of the first cell.

### (2) Energy saving mode information

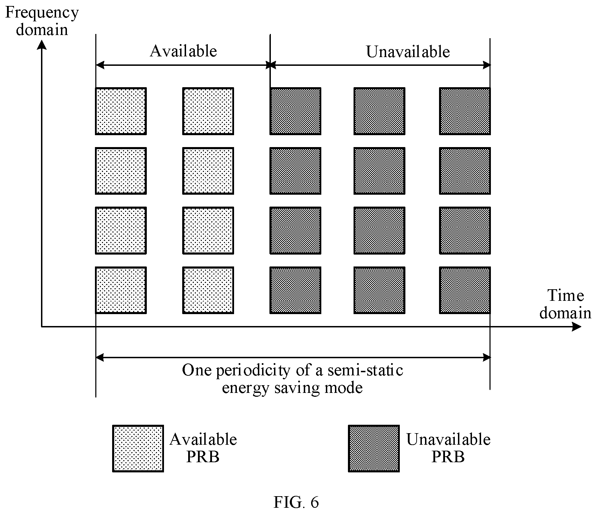

The energy saving mode information indicates an energy saving mode of the first cell. The energy saving mode of the first cell may be a semi-static energy saving mode, a dynamic energy saving mode, or a hybrid energy saving mode. As shown in FIG. 6, the semi-static energy saving mode means that in a periodicity of the semi-static energy saving mode, some resources are available and some resources are unavailable. The dynamic energy saving mode means that available resources and unavailable resources appear dynamically without a fixed periodicity. The hybrid energy saving mode means that the semi-static energy saving mode and the dynamic energy saving mode are both configured. It may be understood that the resource described herein may be a physical resource block (physical resource block, PRB), a symbol, or a slot. FIG. 6 shows an example in which the resource is the PRB. In addition, unavailability in embodiments of this application means unavailability caused by shutdown performed by the second network device for saving energy.

For example, the energy saving mode information may indicate the energy saving mode of the first cell in a plurality of indication manners. For example, the energy saving mode information may include two bits. When values of the two bits are 00, it indicates that the energy saving mode is the semi-static energy saving mode. When values of the two bits are 01, it indicates that the energy saving mode is the dynamic energy saving mode. When values of the two bits are 11, it indicates that the energy saving mode is the hybrid energy saving mode.

When the energy saving mode is the semi-static energy saving mode, the energy saving mode information may further include at least one of the following: the periodicity of the semi-static energy saving mode; a proportion of an available time domain resource (such as a symbol or a slot) in one periodicity; a proportion of an unavailable time domain resource in one periodicity; a proportion of an available PRB in one periodicity; a proportion of an unavailable PRB in one periodicity; and a proportion of a PRB that is actually used in a preset time period. For example, if a length of one periodicity is X1 symbols, and a length of the available time domain resource is Y1 symbols, the proportion of the available time domain resources in one periodicity is Y1/X1. For another example, if one periodicity includes X2 PRBs in total, and Y2 PRBs are available, the proportion of available PRBs in one periodicity is Y2/X2.

### (3) Energy saving degree information

The energy saving degree information indicates an energy saving degree of the first cell. The energy saving degree may be a first energy saving degree or a second energy saving degree. A first data transmission rate is less than a second data transmission rate. The first data transmission rate is a maximum data transmission rate that can be provided for a terminal device by the first cell when an energy saving degree of the first cell in an energy saving direction is the first energy saving degree. The second data transmission rate is a maximum data transmission rate that can be provided for the terminal device by the first cell when the energy saving degree of the first cell in the energy saving direction is the second energy saving degree.

For example, the first energy saving degree may be referred to as deep energy saving, and the second energy saving degree may be referred to as light energy saving. For example, when an energy saving mode of the first cell is a semi-static energy saving mode, and a proportion of an available time domain resource in one periodicity is greater than or equal to a threshold 5 or a proportion of an available PRB in one periodicity is greater than or equal to a threshold 6, the energy saving degree of the first cell in the energy saving direction is the light energy saving. When an energy saving mode of the first cell is a semi-static energy saving mode, and a proportion of an available time domain resource in one periodicity is less than a threshold 5 or a proportion of an available PRB in one periodicity is less than a threshold 6, the energy saving degree of the first cell in the energy saving direction is the deep energy saving. For example, the threshold 5 and the threshold 6 may be pre-stored in a network device.

### (4) Energy saving object information

The energy saving object information indicates an energy saving object of the first cell. The energy saving object may include at least one of the following: a synchronization signal/physical broadcast channel block (synchronization signal/physical broadcast channel block, SSB), a random access signal, a configured grant resource, system information, a sounding reference signal (sounding reference signal, SRS), and a physical uplink control channel (physical uplink control channel, PUCCH).

For example, when the energy saving object includes the SSB, it means that the second network device saves energy for the SSB of the first cell. For example, the second network device increases a sending periodicity of the SSB of the first cell. When the energy saving object includes the random access signal, it means that the second network device saves energy for the random access signal of the first cell. For example, the second network device increases a periodicity of a random access resource for carrying the random access signal. Other energy saving objects may be processed with reference to the foregoing descriptions.

### (5) Energy saving carrier information

The energy saving carrier information indicates an unavailable carrier of the first cell. For example, the energy saving carrier information may include an identifier of the unavailable carrier of the first cell.

For example, the first cell may include one downlink carrier and/or one or more uplink carriers. When the first cell includes a plurality of uplink carriers, the plurality of uplink carriers may include one normal uplink (normal uplink, NUL) carrier and at least one supplementary uplink (supplementary uplink, SUL) carrier. For example, the first cell includes a plurality of uplink carriers (for example, an uplink carrier 1 and an uplink carrier 2) and one downlink carrier. The unavailable carrier of the first cell may be the uplink carrier 1, or may be the uplink carrier 2, or may be the uplink carrier 1 and the uplink carrier 2, or may be the uplink carrier 1, the uplink carrier 2, and the downlink carrier.

When all carriers of the first cell are unavailable, this may be understood as that the second network device shuts down the first cell. In this case, the energy saving carrier information may directly indicate that the first cell is in a shutdown state, and does not need to include identifiers of the unavailable carriers of the first cell.

### (6) Energy saving resource information

The energy saving resource information indicates an unavailable space domain resource of the first cell. For example, the unavailable space domain resource of the first cell may include at least one of the following: a quantity of unavailable antenna ports, a quantity of unavailable beams, a quantity of unavailable channels, a quantity of unavailable antennas, a quantity of unavailable TRPs, and a quantity of unavailable power amplifiers. The unavailable beam may include a transmit beam and/or a receive beam. The unavailable channel may include a transmit channel and/or a receive channel. The unavailable antenna may include a transmit antenna and/or a receive antenna.

### (7) Maximum data transmission rate that can be provided by the first cell for a terminal device

It may be understood that, in an example in which all the M cells are in the energy saving state, the second network device may send, to the first network device, a maximum data transmission rate (for example, a maximum data transmission rate in an uplink direction and/or a downlink direction) that can be provided by each cell of the M cells for the terminal device. For example, the M cells include a cell 1, a cell 2, ..., a cell m. The cell 1 can provide a maximum data transmission rate V1 for the terminal device, the cell 2 can provide a maximum data transmission rate V2 for the terminal device, ..., and the cell m can provide a maximum data transmission rate Vm for the terminal device. Alternatively, the second network device may send, to the first network device, a maximum data transmission rate V0 that can be provided by the M cells for the terminal device in total. V0=V1+V2+...+Vm.

S503: The first network device sends second request information to the second network device based on the energy saving information of the M cells, where the second request information is for requesting to add N cells in the M cells to a secondary cell group of the terminal device, in other words, the second request information is for requesting to add the second network device as a secondary network device of the terminal device. N is a positive integer, and N is less than or equal to M.

Herein, the second request information may be, for example, a secondary base station addition request message

In a possible implementation, the first network device may select the N cells from the M cells based on the energy saving information of the M cells, and send the second request information to the second network device. The first cell is used as an example, and the first network device may determine, based on the energy saving information of the first cell, whether to select the first cell. For example, if the first cell is in the non-energy-saving state, the first cell may be selected. If the first cell is in the energy saving state, the first cell may not be selected. For another example, if the energy saving degree of the first cell in the energy saving direction is the light energy saving, the first cell may be selected. If the energy saving degree of the first cell in the energy saving direction is the deep energy saving, the first cell may not be selected. For another example, if the energy saving object of the first cell includes at least one of the SSB, the random access signal, the configured grant resource, the system information, the SRS, and the PUCCH, the first cell may not be selected. Otherwise, the first cell may be selected.

In another possible implementation, if the first network device determines, based on the energy saving information of the M cells and a data transmission requirement of the terminal device, that N cells that can meet the data transmission requirement of the terminal device exist in the M cells, the first network device may determine to request to add the second network device as the secondary network device of the terminal device, and sends the second request information to the second network device. Otherwise, the first network device may not send the second request information to the second network device. For example, the data transmission requirement of the terminal device may include a transmission reliability requirement, a transmission rate requirement, a transmission direction requirement (for example, data whose transmission needs to be performed is uplink data and/or downlink data), a transmission latency requirement, and the like. This is not specifically limited.

There may be a plurality of implementations in which the first network device determines, based on the energy saving information of the M cells and the data transmission requirement of the terminal device, whether the N cells exist in the M cells.

For example, in a manner, the first network device determines whether a maximum data transmission rate that can be provided by the M cells for the terminal device in total in the uplink direction or the downlink direction is greater than or equal to a data transmission rate required by service data of the terminal device. If the provided maximum data transmission rate is greater than or equal to the required data transmission rate, the first network device may determine that the M cells can meet the data transmission requirement of the terminal device (in this case, M=N), and send the second request information to the second network device. If the provided maximum data transmission rate is less than the required data transmission rate, the first network device may determine not to request to add the second network device as the secondary network device of the terminal device, that is, not to send the second request information.

In another possible manner, the first network device selects the N cells from the M cells based on the energy saving information of the M cells and the data transmission requirement of the terminal device, and sends the second request information to the second network device. The first cell is used as an example, and the first network device may determine, based on the energy saving information of the first cell and the data transmission requirement of the terminal device, whether to select the first cell. For example, the terminal device has a downlink data transmission requirement, and does not have an uplink data transmission requirement. If the energy saving direction of the first cell is the uplink direction, the first cell may be selected. If the energy saving direction of the first cell is the downlink direction, the first cell may not be selected. For another example, data (for example, ultra-reliable low-latency communication (ultra-reliable low-latency communication, URLLC) data) of the terminal device has a relatively high requirement on transmission latency. If the energy saving mode of the first cell in the energy saving direction is the dynamic energy saving mode, the first cell may be selected. If the energy saving mode of the first cell in the energy saving direction is the semi-static energy saving mode, the first cell may not be selected.

It may be understood that a specific manner in which the first network device determines, based on the energy saving information of the M cells, whether to request to add the second network device as the secondary network device depends on internal implementation of the first network device. The foregoing descriptions are merely some possible examples. This is not limited in embodiments of this application.

According to the foregoing method, the first network device may determine, based on the energy saving information of the M cells of the second network device, whether to request to add the second network device as the secondary network device of the terminal device. For example, if all the M cells are in a deep energy saving state, it is very likely that the second network device cannot meet the data transmission requirement of the terminal device in this case. Further, the first network device may not request to add the second network device as the secondary network device of the terminal device. In this way, because energy saving information of a cell managed by a candidate secondary network device is considered when the first network device adds the secondary network device for the terminal device, this facilitates adding an appropriate network device as the secondary network device of the terminal device.

The first network device and the second network device may both be base stations. Alternatively, the first network device may be a CU, and the second network device may be a DU. In other words, the DU may alternatively send, to the CU, energy saving information of at least one cell managed by the DU. Further, the CU may determine, based on the energy saving information of the at least one cell, whether to add the cell to a secondary cell group of the terminal device. For specific implementation, refer to the foregoing descriptions.

Optionally, the foregoing method may further include the following steps.

S504: After the second network device receives the second request information from the first network device, if the second network device determines that the terminal device can be admitted, the second network device may allocate radio resources to the terminal device, and send an acknowledge message to the first network device, where the acknowledge message may be, for example, a secondary base station addition request acknowledge message.

S505: After the first network device receives the acknowledge message from the second network device, the first network device may indicate to the terminal device that the second network device is added as the secondary network device of the terminal device, so that the first network device and the second network device can perform transmission of the data of the terminal device.

For specific implementations of S504 and S505, refer to the descriptions of S404 to S407 in FIG. 4.

It may be understood that after the first network device adds the second network device as the secondary network device of the terminal device, the first network device may further perform another possible operation based on energy saving information of the N cells. For example, the first network device may further determine, based on the energy saving information of the N cells, how much data is to be split to the second network device. For example, if the N cells are all in the energy saving state, a relatively small amount of data may be split to the second network device. If the N cells are not all in the energy saving state, a relatively large amount of data may be split to the second network device. For another example, the first network device may further determine, based on the energy saving information of the N cells, whether a cell in a master cell group of the terminal device is to enter the energy saving state. For example, if all the N cells are in the non-energy-saving state, and the terminal device needs to perform transmission of a small amount of data, the first network device may determine that one or more cells in the master cell group is to enter the energy saving state.

Optionally, after the first network device adds the second network device as the secondary network device of the terminal device, the foregoing method may further include another possible step. The following describes several possible implementations with reference to Implementations 1 to 4.

### Implementation 1

In Implementation 1, the foregoing method may further include the following steps.

S506-a: After the second network device updates energy saving information of at least one of the N cells, the second network device sends first indication information to the first network device, where the first indication information indicates that the second network device has updated the energy saving information of the at least one cell. For example, the first indication information may include updated energy saving information of the at least one cell.

For example, the first indication information may be carried in a secondary base station release request message or another possible message. This is not specifically limited.

In a possible implementation, the at least one cell may include a primary secondary cell and/or a secondary cell that is managed by the second network device and that is different from the primary secondary cell. In other words, the second network device may send the first indication information to the first network device after updating energy saving information of any cell of the N cells.

In another possible implementation, the at least one cell includes a primary secondary cell. In other words, the second network device may send the first indication information to the first network device after updating energy saving information of the primary secondary cell. If the second network device updates energy saving information of a secondary cell different from the primary secondary cell, but does not update the energy saving information of the primary secondary cell, the second network device may not send the first indication information to the first network device.

Optionally, for the foregoing two possible implementations, in an example of the primary secondary cell, after updating the energy saving information of the primary secondary cell, the second network device may selectively send the first indication information to the first network device. For example, if the second network device updates an energy saving degree of the primary secondary cell from light energy saving to deep energy saving, the second network device may send updated energy saving information of the primary secondary cell to the first network device. If the second network device updates an energy saving degree of the primary secondary cell from deep energy saving to light energy saving, the second network device may not need to send the first indication information to the first network device.

S507-a: The first network device determines, based on the first indication information, whether to release the second network device.

For example, after the first network device receives the first indication information, if the first network device determines, based on the updated energy saving information that is of the at least one cell and that is included in the first indication information, that the N cells cannot meet the data transmission requirement of the terminal device, the first network device may release the second network device, and attempt to add another secondary network device for the terminal device. If the first network device determines that the N cells can still meet the data transmission requirement of the terminal device, the first network device may not release the second network device, and continues to split the data of the terminal device to the second network device. Alternatively, after the first network device receives the first indication information, the first network device may release the second network device. (For example, refer to the foregoing descriptions. The primary secondary cell is used as an example. The second network device sends the first indication information to the first network device when the energy saving degree of the primary secondary cell is updated from the light energy saving to the deep energy saving. Because it is very likely that the primary secondary cell in the deep energy saving state cannot meet the data transmission requirement of the terminal device, the first network device may directly release the second network device).

According to the foregoing method, after the second network device updates the energy saving information of the at least one cell, the second network device may notify the first network device. Therefore, when a cell managed by the second network device cannot meet the data transmission requirement of the terminal device because of update of energy saving information, the first network device may adjust a data transmission manner in a timely manner, for example, release the second network device and attempts to add another secondary network device, to avoid affecting data transmission of the terminal device.

### Implementation 2

In Implementation 2, the foregoing method may further include the following steps.

S506-b: The second network device sends third request information to the first network device, where the third request information is for requesting to update energy saving information of at least one of the N cells.

For example, the third request information may include target energy saving information of the at least one cell to be updated by the second network device. In other words, when the second network device wants to update the energy saving information of the at least one cell, the second network device may first send the third request information to the first network device.

S507-b: After the first network device receives the third request information, the first network device determines, based on the third request information, whether to allow the second network device to update the energy saving information of the at least one cell.

For example, if the first network device determines to allow the second network device to update the energy saving information of the at least one cell, the first network device may send second indication information to the second network device. The second indication information indicates that the second network device is allowed to update the energy saving information of the at least one cell. If the first network device determines not to allow the second network device to update the energy saving information of the at least one cell, the first network device may send third indication information to the second network device. The third indication information indicates that the second network device is not allowed to update the energy saving information of the at least one cell, or that the first network device may release the second network device.

In a possible implementation, the first network device may determine, based on the target energy saving information of the at least one cell to be updated by the second network device and the data transmission requirement of the terminal device, whether to allow the second network device to update the energy saving information of the at least one cell. For example, if the first network device determines that the data transmission requirement of the terminal device can still be met after the second network device updates the energy saving information of the at least one cell to the target energy saving information, the first network device may allow the second network device to update the energy saving information of the at least one cell.

According to the foregoing method, the second network device may first request, from the first network device, whether the first network device allows the update of the energy saving information of the at least one cell. If the first network device allows the update of the energy saving information of the at least one cell, the second network device may update the energy saving information of the at least one cell. In other words, the first network device may control the second network device to update the energy saving information of the at least one cell. This can effectively ensure that energy saving of the second network device is implemented without affecting data transmission of the terminal device.

### Implementation 3

In Implementation 3, the foregoing method may further include the following steps.

S506-c: The first network device sends fourth request information to the second network device, where the fourth request information is for requesting the second network device to update energy saving information of at least one of the N cells.

For example, after the first network device determines that at least one of the following (1), (2), and (3) is met, the first network device sends the fourth request information to the second network device. (1) The data transmission requirement of the terminal device changes. (2) Key data of the terminal device is to arrive or has arrived. (3) An amount of data that is of the terminal device and that is cached in the first network device is greater than or equal to a threshold 4. For example, the first network device determines that new service data of the terminal device arrives, and a transmission latency requirement of the new service data is relatively high (that is, the data transmission requirement of the terminal device changes). If an energy saving mode of the at least one of the N cells is the semi-static energy saving mode (the semi-static energy saving mode is difficult to meet the transmission latency requirement), the first network device may send the fourth request information to the second network device. Further, the fourth request information may include a cause value. The cause value indicates a cause for requesting the second network device by the first network device to update the energy saving information of the at least one of the N cells. The cause may be at least one of (1), (2), and (3) above.

Latest energy saving information of the N cells may be actively sent by the second network device to the first network device, or may be sent by the second network device to the first network device based on a request of the first network device.

S507-c: After the second network device receives the fourth request information, the second network device may update the energy saving information of the at least one of the N cells based on the fourth request information, and send fourth indication information to the first network device, where the fourth indication information indicates that the second network device has updated the energy saving information of the at least one cell.

Alternatively, the second network device may not update the energy saving information of the at least one of the N cells based on the fourth request information, and send fifth indication information to the first network device, where the fifth indication information indicates that the second network device does not update the energy saving information of the at least one cell. In this case, the fifth indication information may be carried in a secondary base station release request message. Correspondingly, after the first network device receives the secondary base station release request message, the first network device may release the second network device.

According to the foregoing method, the first network device may request the second network device to update the energy saving information of the at least one cell, so that the second network device can update the energy saving information of the at least one cell based on the request of the first network device, to meet the data transmission requirement of the terminal device.

### Implementation 4

In Implementation 4, the foregoing method may further include the following steps.

S506-d: After the first network device determines that the second network device is not needed to split the data of the terminal device, the first network device sends sixth indication information to the second network device, where the sixth indication information indicates that the second network device is not needed to split the data of the terminal device.

Herein, there may be a plurality of cases in which the first network device determines that the second network device is not needed to split the data of the terminal device. For example, key data transmission of the terminal device is completed and/or an amount of data that is of the terminal device and that is cached in the first network device is less than a threshold 4.

It may be understood that, that the first network device determines that the second network device is not needed to split the data of the terminal device may mean: The first network device determines that the second network device is temporarily not needed to split the data of the terminal device, and subsequently, the second network device may be needed again to split the data of the terminal device.

S507-d: The second network device receives the sixth indication information, and may flexibly determine, based on the sixth indication information, whether to update the energy saving information of the at least one of the N cells.

For example, if the second network device updates the energy saving information of the at least one of the N cells, the second network device may send the first indication information to the first network device, where the first indication information indicates that the second network device has updated the energy saving information of the at least one cell.

Subsequently, after the first network device determines that the second network device is needed to split the data of the terminal device, the first network device may determine, based on latest energy saving information of the N cells, whether the N cells can meet the data transmission requirement of the terminal device. If the N cells can meet the data transmission requirement of the terminal device, the first network device may split the data of the terminal device to the second network device. If the N cells cannot meet the data requirement of the terminal device, the first network device may release the second network device, or perform S506-c.

According to the foregoing method, after the second network device learns that the first network device determines that the second network device is not needed to split the data of the terminal device, the second network device may flexibly determine whether to update the energy saving information of the at least one of the N cells. For example, the second network device may perform an operation, which may save more energy, on the at least one of the N cells. This can save energy without affecting data transmission of the terminal device.

### Embodiment 2

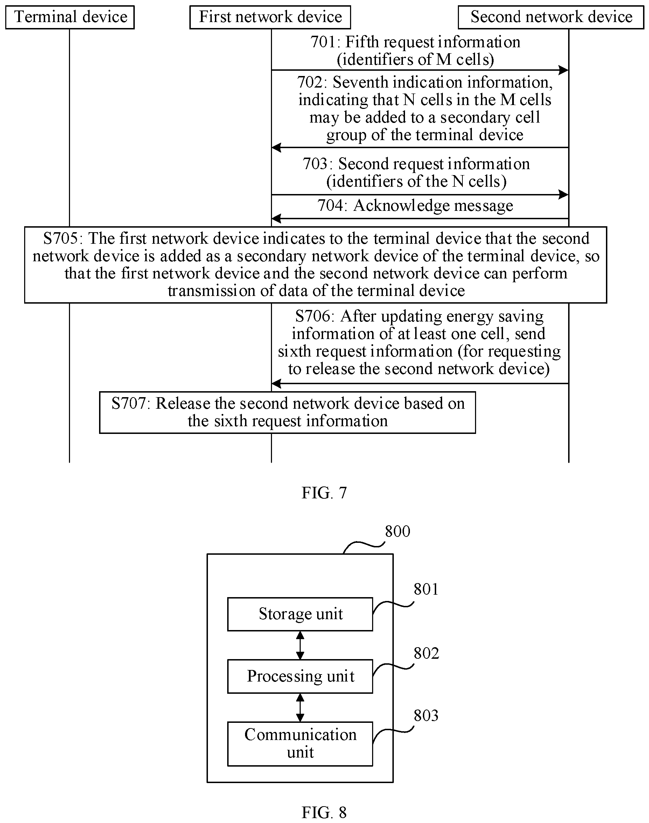

FIG. 7 is a schematic flowchart corresponding to a communication method according to Embodiment 2 of this application. As shown in FIG. 7, the method includes the following steps.

S701: A first network device sends fifth request information to a second network device, where the fifth request information includes identifiers of M cells, and the fifth request information is for requesting the second network device to determine, based on energy saving information of the M cells, whether the M cells can be added to a secondary cell group of a terminal device.

Optionally, the fifth request information may further include data transmission requirement information of the terminal device.

S702: After the second network device receives the fifth request information, the second network device may send seventh indication information to the first network device, where the seventh indication information indicates that N cells in the M cells may be added to the secondary cell group of the terminal device.

In a possible implementation, after the second network device receives the fifth request information, the second network device may select the N cells from the M cells, and send the seventh indication information to the second network device. For example, the second network device may select the N cells from the M cells based on the energy saving information of the M cells. For example, if the N cells in the M cells are all in a non-energy-saving state, the second network device may send the seventh indication information to the first network device, where the seventh indication information indicates that the N cells in the M cells may be added to the secondary cell group of the terminal device.

In another possible implementation, the fifth request information further includes the data transmission requirement information of the terminal device. If the second network device determines, based on the energy saving information of the M cells and a data transmission requirement of the terminal device, that N cells that can meet the data transmission requirement of the terminal device exist in the M cells, the second network device may send the seventh indication information to the first network device.

S703: After the first network device receives the seventh indication information, the first network device sends second request information to the second network device, where the second request information is for requesting to add the N cells to the secondary cell group of the terminal device, or the second request information is for requesting to add the second network device as a secondary network device of the terminal device.

S704: After the second network device receives the second request information from the first network device, if the second network device determines that the terminal device can be admitted, the second network device may allocate radio resources to the terminal device, and send an acknowledge message to the first network device.

S705: After the first network device receives the acknowledge message from the second network device, the first network device may indicate to the terminal device that the second network device is added as the secondary network device of the terminal device, so that the first network device and the second network device can perform transmission of data of the terminal device.

S706: After the second network device updates energy saving information of at least one of the N cells, the second network device sends sixth request information to the first network device, where the sixth request information is for requesting to release the second network device.

For example, the sixth request information may carry a cause value, and the cause value indicates a cause for requesting to release the second network device. For example, the cause may be: After energy saving information of the N cells is updated, the N cells cannot meet the data transmission requirement of the terminal device. In other words, after the second network device updates the energy saving information of the at least one of the N cells, if the N cells still meet the data transmission requirement of the terminal device, the second network device may not send the sixth request information to the first network device. If the N cells cannot meet the data transmission requirement of the terminal device, the second network device may send the sixth request information to the first network device.

S707: After the first network device receives the sixth request information, the first network device may release the second network device based on the sixth request information.

According to the foregoing method, the first network device may first send the request information to the second network device. After the second network device determines, based on the energy saving information of the M cells, that the N cells in the M cells can be added to the secondary cell group of the terminal device, the first network device then requests the second network device to add the N cells to the secondary cell group of the terminal device. In this way, because energy saving information of a cell managed by a candidate secondary network device is considered when the secondary network device is added for the terminal device, this facilitates adding an appropriate network device as the secondary network device of the terminal device.

For Embodiment 1 and Embodiment 2 above, it may be understood that:
(1) Step numbers in the flowcharts described in Embodiment 1 and Embodiment 2 are merely an example of an execution procedure, and do not constitute a limitation on an execution sequence of the steps. In embodiments of this application, there is no strict execution sequence between steps that do not have a time sequence dependency relationship with each other. Not all the steps shown in the flowcharts are mandatory steps. Some steps may be deleted from the flowcharts based on an actual requirement, or another possible step may be added to the flowcharts based on an actual requirement.
(2) The foregoing focuses on a difference between Embodiment 1 and Embodiment 2. For other content except the difference, Embodiment 1 and Embodiment 2 may be mutually referenced. In addition, in a same embodiment, different implementations or different examples may also be mutually referenced.

The foregoing mainly describes the solutions provided in embodiments of this application from a perspective of interaction between communication apparatuses. It may be understood that, to implement the foregoing functions, the network device may include a corresponding hardware structure and/or software module for performing the functions. A person skilled in the art should be easily aware that, with reference to the units and algorithm steps in the examples described in embodiments disclosed in this specification, embodiments of this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes outside of the scope of this application.

In embodiments of this application, the network device may be divided into functional units based on the foregoing method examples. For example, each functional unit may be obtained through division based on a corresponding function, or two or more functions may be integrated into one unit. The foregoing integrated unit may be implemented in a form of hardware, or may be implemented in a form of a software functional unit.

When an integrated unit is used, FIG. 8 is a possible example block diagram of an apparatus according to an embodiment of this application. As shown in FIG. 8, the apparatus 800 may include a processing unit 802 and a communication unit 803. The processing unit 802 is configured to control and manage an action of the apparatus 800. The communication unit 803 is configured to support the apparatus 800 in communicating with another device. Optionally, the communication unit 803 may also be referred to as a transceiver unit, and may include a receiving unit and/or a sending unit, which are respectively configured to perform a receiving operation and a sending operation. The apparatus 800 may further include a storage unit 801, configured to store program code and/or data of the apparatus 800.

The apparatus 800 may be a first network device in the foregoing embodiment. The processing unit 802 may support the apparatus 800 in performing actions of the first network device in the foregoing method examples. Alternatively, the processing unit 802 mainly performs internal actions of a second network device in the method example, and the communication unit 803 may support communication between the apparatus 800 and another device.

For example, in an embodiment, the communication unit 803 is configured to: receive energy saving information of M cells from the second network device, where the M cells are cells managed by the second network device; and send second request information to the second network device based on the energy saving information of the M cells, where the second request information is for requesting to add N cells in the M cells to a secondary cell group of a terminal device.

The apparatus 800 may be a second network device in the foregoing embodiment. The processing unit 802 may support the apparatus 800 in performing actions of the second network device in the foregoing method examples. Alternatively, the processing unit 802 mainly performs internal actions of the second network device in the method example, and the communication unit 803 may support communication between the apparatus 800 and another device.

For example, in an embodiment, the communication unit 803 is configured to: send energy saving information of M cells to a first network device, where the M cells are cells managed by the second network device; and receive second request information that is sent by the first network device based on the energy saving information of the M cells, where the second request information is for requesting to add N cells in the M cells to a secondary cell group of a terminal device.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or may be implemented in a form in which the processing element invokes software.

In an example, a unit in any one of the foregoing apparatuses may be one or more integrated circuits configured to implement the foregoing methods, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a system-on-a-chip (system-on-a-chip, SoC) form.

The foregoing unit for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit for sending is an interface circuit of the apparatus, and is configured to send a signal to another apparatus. For example, when the apparatus is implemented in a manner of a chip, the sending unit is an interface circuit that is of the chip and that is configured to send a signal to another chip or apparatus.

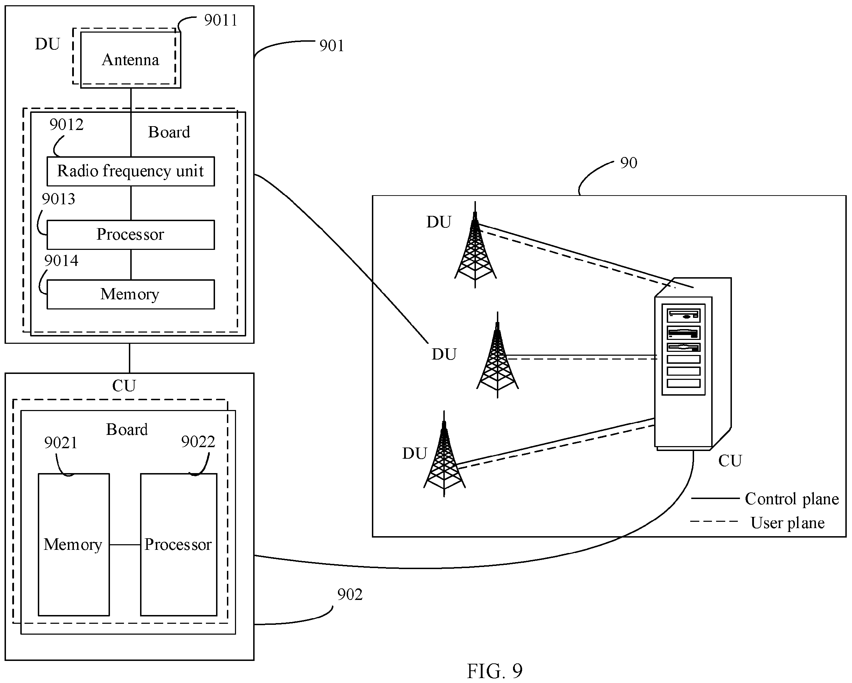

FIG. 9 is a diagram of a structure of a network device according to an embodiment of this application. The network device (for example, a base station) may be used in a communication system shown in FIG. 1, to perform functions of a first network device or a second network device in the foregoing method embodiments. As shown in FIG. 9, the network device 90 may include one or more DUs 901 and one or more CUs 902. The DU 901 may include at least one antenna 9011, at least one radio frequency unit 9012, at least one processor 9013, and at least one memory 9014. The DU 901 is mainly configured to receive and send a radio frequency signal, perform conversion between the radio frequency signal and a baseband signal, and perform some baseband processing. The CU 902 may include at least one processor 9022 and at least one memory 9021.

The CU 902 is mainly configured to perform baseband processing, control the network device, and the like. The DU 901 and the CU 902 may be physically disposed together, or may be physically separated, namely, a distributed base station. The CU 902 is a control center of the network device, may also be referred to as a processing unit, and is mainly configured to complete a baseband processing function. For example, the CU 902 may be configured to control the network device to perform the operation procedure related to the network device in the foregoing method embodiments.

In addition, optionally, the network device 90 may include one or more radio units, one or more DUs, and one or more CUs. The DU may include at least one processor 9013 and at least one memory 9014, the radio unit may include at least one antenna 9011 and at least one radio frequency unit 9012, and the CU may include at least one processor 9022 and at least one memory 9021.

In an example, the CU 902 may include one or more boards. A plurality of boards may jointly support a radio access network (for example, a 5G network) with a single access standard, or may separately support radio access networks (for example, an LTE network, a 5G network, or another network) with different access standards. The memory 9021 and the processor 9022 may serve one or more boards. In other words, a memory and a processor may be disposed on each board. Alternatively, a plurality of boards may share a same memory and a same processor. In addition, a necessary circuit may be further disposed on each board. The DU 901 may include one or more boards. A plurality of boards may jointly support a radio access network (for example, a 5G network) with a single access standard, or may separately support radio access networks (for example, an LTE network, a 5G network, or another network) with different access standards. The memory 9014 and the processor 9013 may serve one or more boards. In other words, a memory and a processor may be disposed on each board. Alternatively, a plurality of boards may share a same memory and a same processor. In addition, a necessary circuit may be further disposed on each board.

The network device shown in FIG. 9 can implement processes related to the first network device or the second network device in the foregoing method embodiments. Operations and/or functions of the modules in the network device shown in FIG. 9 are separately used to implement corresponding procedures in the foregoing method embodiments. For details, refer to the descriptions in the foregoing method embodiments. To avoid repetition, detailed descriptions are appropriately omitted herein.

The terms "system" and "network" may be used interchangeably in embodiments of this application. "At least one" means one or more, and "a plurality of' means two or more. "And/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

A person skilled in the art should understand that embodiments of this application may be provided as a method, a system, or a computer program product. Therefore, this application may use a form of hardware-only embodiments, software-only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may also be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the spirit and scope of this application. In this way, this application is intended to cover these modifications and variations in this application provided that they fall within the scope of the claims of this application and their equivalent technologies.

## Claims

1. A communication method, wherein the method is applicable to a first network device or a module in the first network device, and the method comprises:
receiving energy saving information of M cells from a second network device, wherein the M cells are cells managed by the second network device; and
sending second request information to the second network device based on the energy saving information of the M cells, wherein the second request information is for requesting to add N cells in the M cells to a secondary cell group of a terminal device, wherein
M and N are positive integers, and N is less than or equal to M.

2. The method according to claim 1, wherein the method further comprises:
sending first request information to the second network device, wherein the first request information comprises identifiers of the M cells, the first request information is for requesting the energy saving information of the M cells, the M cells are selected by the first network device from W cells based on measurement results that are of the W cells and that are reported by the terminal device, W is a positive integer, and W is greater than or equal to M.

3. The method according to claim 1 or 2, wherein the M cells comprises a first cell, and energy saving information of the first cell comprises at least one of the following:
energy saving state information, wherein the energy saving state information indicates whether the first cell is in an energy saving state;
energy saving direction information, wherein the energy saving direction information indicates an energy saving direction of the first cell, and the energy saving direction comprises an uplink direction and/or a downlink direction;
energy saving mode information, wherein the energy saving mode information indicates an energy saving mode used by the first cell, and the energy saving mode is a semi-static energy saving mode, a dynamic energy saving mode, or a hybrid energy saving mode;
energy saving degree information, wherein the energy saving degree information indicates an energy saving degree of the first cell;
energy saving object information, wherein the energy saving object information indicates an energy saving object of the first cell, and the energy saving object comprises at least one of the following: a synchronization signal/physical broadcast channel block SSB, a random access signal, a configured grant, system information, a sounding reference signal SRS, and a physical uplink control channel PUCCH;
energy saving carrier information, wherein the energy saving carrier information indicates an unavailable carrier of the first cell;
energy saving resource information, wherein the energy saving resource information indicates an unavailable space domain resource of the first cell; or
a maximum data transmission rate that can be provided by the first cell for the terminal device.

4. The method according to claim 3, wherein when the energy saving mode is the semi-static energy saving mode, the energy saving mode information comprises at least one of the following:
a periodicity of the semi-static energy saving mode;
a proportion of an available time domain resource in the periodicity;
a proportion of an unavailable time domain resource in the periodicity;
a proportion of an available physical resource block PRB in the periodicity;
a proportion of an unavailable PRB in the periodicity; and
a proportion of a PRB that is actually used in a preset time period.

5. The method according to claim 3 or 4, wherein the unavailable space domain resource of the first cell comprises at least one of the following:
a quantity of unavailable ports;
a quantity of unavailable beams;
a quantity of unavailable channels;
a quantity of unavailable antennas;
a quantity of unavailable transmission reception points TRPs; and
a quantity of unavailable power amplifiers.

6. The method according to any one of claims 1 to 5, wherein the method further comprises:
receiving first indication information from the second network device, wherein the first indication information indicates that the second network device has updated energy saving information of at least one of the N cells.

7. The method according to claim 6, wherein the first indication information comprises updated energy saving information of the at least one cell; and
the method further comprises:
releasing the second network device based on the updated energy saving information of the at least one cell.

8. The method according to any one of claims 1 to 5, wherein the method further comprises:
receiving third request information from the second network device, wherein the third request information is for requesting to update energy saving information of at least one of the N cells; and
sending second indication information to the second network device based on the third request information, wherein the second indication information indicates that the second network device is allowed to update the energy saving information of the at least one cell.

9. The method according to any one of claims 1 to 5, wherein the method further comprises:
sending fourth request information to the second network device, wherein the fourth request information is for requesting the second network device to update energy saving information of at least one of the N cells.

10. The method according to claim 9, wherein before the sending fourth request information to the second network device, the method further comprises at least one of the following:
determining that a data transmission requirement of the terminal device changes;
determining that key data of the terminal device is to arrive or has arrived; and
determining that an amount of data that is of the terminal device and that is cached in the first network device is greater than or equal to a threshold.

11. A communication method, wherein the method is applicable to a second network device or a module in the second network device, and the method comprises:
sending energy saving information of M cells to a first network device, wherein the M cells are cells managed by the second network device; and
receiving second request information that is sent by the first network device based on the energy saving information of the M cells, wherein the second request information is for requesting to add N cells in the M cells to a secondary cell group of a terminal device, wherein
M and N are positive integers, and N is less than or equal to M.

12. The method according to claim 11, wherein the method further comprises:
receiving first request information from the first network device, wherein the first request information comprises identifiers of the M cells, the first request information is for requesting the energy saving information of the M cells, the M cells are selected by the first network device from W cells based on measurement results that are of the W cells and that are reported by the terminal device, W is a positive integer, and W is greater than or equal to M.

13. The method according to claim 11 or 12, wherein the M cells comprises a first cell, and energy saving information of the first cell comprises at least one of the following:
energy saving state information, wherein the energy saving state information indicates whether the first cell is in an energy saving state;
energy saving direction information, wherein the energy saving direction information indicates an energy saving direction of the first cell, and the energy saving direction comprises an uplink direction and/or a downlink direction;
energy saving mode information, wherein the energy saving mode information indicates an energy saving mode used by the first cell, and the energy saving mode is a semi-static energy saving mode, a dynamic energy saving mode, or a hybrid energy saving mode;
energy saving degree information, wherein the energy saving degree information indicates an energy saving degree of the first cell;
energy saving object information, wherein the energy saving object information indicates an energy saving object of the first cell, and the energy saving object comprises at least one of the following: an SSB, a random access signal, a configured grant, system information, an SRS, and a PUCCH;
energy saving carrier information, wherein the energy saving carrier information indicates an unavailable carrier of the first cell;
energy saving resource information, wherein the energy saving resource information indicates an unavailable space domain resource of the first cell; and
a maximum data transmission rate that can be provided by the first cell for the terminal device.

14. The method according to claim 13, wherein when the energy saving mode is the semi-static energy saving mode, the energy saving mode information comprises at least one of the following:
a periodicity of the semi-static energy saving mode;
a proportion of an available time domain resource in the periodicity;
a proportion of an unavailable time domain resource in the periodicity;
a proportion of an available PRB in the periodicity;
a proportion of an unavailable PRB in the periodicity; and
a proportion of a PRB that is actually used in a preset time period.

15. The method according to claim 13 or 14, wherein the unavailable space domain resource of the first cell comprises at least one of the following:
a quantity of unavailable ports;
a quantity of unavailable beams;
a quantity of unavailable channels;
a quantity of unavailable antennas;
a quantity of unavailable transmission reception points TRPs; and
a quantity of unavailable power amplifiers.

16. The method according to any one of claims 11 to 15, wherein the method further comprises:
sending first indication information to the first network device, wherein the first indication information indicates that the second network device has updated energy saving information of at least one of the N cells.

17. The method according to claim 16, wherein the first indication information comprises updated energy saving information of the at least one cell.

18. The method according to any one of claims 11 to 15, wherein the method further comprises:
sending third request information to the first network device, wherein the third request information is for requesting to update energy saving information of at least one of the N cells; and
receiving second indication information from the first network device, wherein the second indication information indicates that the second network device is allowed to update the energy saving information of the at least one cell.

19. The method according to any one of claims 11 to 15, wherein the method further comprises:
receiving fourth request information from the first network device, wherein the fourth request information is for requesting the second network device to update energy saving information of at least one of the N cells.

20. The method according to claim 19, wherein the fourth request information comprises a cause value, and the cause value indicates at least one of the following:
a data transmission requirement of the terminal device changes;
key data of the terminal device is to arrive or has arrived; and
an amount of data that is of the terminal device and that is cached in the first network device is greater than or equal to a threshold.

21. A communication apparatus, comprising a module configured to perform the method according to any one of claims 1 to 10, or comprising a module configured to perform the method according to any one of claims 11 to 20.

22. A communication apparatus, comprising a processor, wherein the processor is coupled to a memory, the memory stores a computer program, and the processor is configured to invoke the computer program in the memory, to enable the communication apparatus to perform the method according to any one of claims 1 to 10, or the method according to any one of claims 11 to 20.

23. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 10 or the method according to any one of claims 11 to 20 by using a logic circuit or executing code instructions.

24. A computer-readable storage medium, wherein the storage medium stores a computer program or instructions;
and when the computer program or the instructions are performed by a computer, the method according to any one of claims 1 to 20 is implemented.

25. A computer program product, wherein when a computer reads and executes the computer program product, the computer is enabled to perform the method according to any one of claims 1 to 20.

26. A communication system, comprising a first network device configured to perform the method according to any one of claims 1 to 10, and a second network device configured to perform the method according to any one of claims 11 to 20.
